(19) Europäisches Patentamt
European Patent Office
Office européen des brevets

(11) **EP 3 838 948 A1**

(12) **EUROPÄISCHE PATENTANMELDUNG**

(43) Veröffentlichungstag:
**23.06.2021 Patentblatt 2021/25**

(21) Anmeldenummer: **19216802.9**

(22) Anmeldetag: **17.12.2019**

(51) Int Cl.:
***C08G 18/10*** *(2006.01)* ***C08G 18/32*** *(2006.01)*
***C08G 18/73*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **THERMOPLASTISCHES ALIPHATISCHES POLYURETHANPREPOLYMER MIT NIEDRIGER KRISTALLISATIONSENTHALPIE**

(57) Die vorliegende Erfindung betrifft thermoplastische aliphatische Polyurethanprepolymere bei denen das Verhältnis $\overline{M}_z/\overline{M}_w$ in einem Bereich von 2,3 bis 6 liegt und einen Kristallinitätgrad $\chi$ im Bereich von 10 % bis 55 % aufweisen, Zusammensetzungen enthaltend solche Polyurethanprepolymere, ein Verfahren zu deren Herstellung und die Verwendung dieser Polyurethanprepolymere.

EP 3 838 948 A1

## Beschreibung

Die vorliegende Erfindung betrifft thermoplastische aliphatische Polyurethanprepolymere bei denen das Verhältnis $\overline{M}_z/\overline{M}_w$ in einem Bereich von 2,3 bis 6 liegt und einen Kristallinitätsgrad $\chi$ im Bereich von 10 % bis 55 % aufweisen, Zusammensetzungen enthaltend solche Polyurethanprepolymere, ein Verfahren zu dessen Herstellung und die Verwendung dieser Polyurethanprepolymere.

Polyurethanprepolymere sind wichtige Komponenten in der Polyurethanchemie. Als Hydroxyterminierte Prepolymere werden sie als OH-Komponente kombiniert mit Polyisocyanaten beispielsweise in Zwei-Komponenten Lack- oder Klebstoffsystemen verwendet. Typische Anwendungsgebiete sind Klebstoffe für die Verpackungsindustrie oder auch Systeme zur Beschichtung von Leder oder Textilien (Kunststoff Handbuch Band 7, Polyurethane, G. Oertel, Hanser Verlag, S. 99ff).

Thermoplastische aliphatische Polyurethanprepolymere, die aus kurzkettigen aliphatischen Diolen und aliphatischen Polyisocyanaten aufgebaut sind, weisen wertvolle Eigenschaften auf. Als Hartsegment-Bausteine eignen sie sich hervorragend zur Modifikation diverser Produkte und Werkstoffe. Thermoplastische Polyurethanprepolymere, die eine geringere Kristallisationsenthalpie und geringere Kristallisationstemperatur aufweisen im Vergleich zu vergleichbaren thermoplastischen Polyurethanprepolymeren mit gleichem Schmelzpunkt, sind besonders begehrt, da weniger Energie beim Kristallisieren frei wird, d.h. die Kristallinität ist geringer. Durch die geringere Kristallisation kommt es zu einem geringeren Schrumpf und damit zu einer höheren Maßhaltigkeit bei der Weiterverarbeitung/Extrusion/Spritzguss solcher thermoplastischer Polyurethanprepolymere und bei den aus solchen Polyurethanprepolymeren hergestellten Polyurethanpolymeren.

EP1846526A1 offenbart kristalline oder semikristalline Oligomer oder Polymere sowie Zusammensetzungen enthaltend diese Oligomere und Polymere für Pulverbeschichtungen. Die Oligomere und Polymere sind Polyurethane oder Polyester, die mindestens einen Polyether aufweisen sowie UV-härtbare Acrylatgruppen oder thermisch härtbare Diolgruppen.

EP2004720A1 offenbart Polyurethan erhältlich durch die Umsetzung von Polyisocyanaten mit verzweigten Polyolen und Diolen, sowie ein Verfahren zu dessen Herstellung. Beschrieben wird Polyurethan aufgebaut aus 1,5-Pentandiol, Trimethylolpropan und 4,4-Methylen-bis-(cyclohexylisocyanat), welches nach Alterung bei 25 °C für 7 Monate einen Kristallinitätsgrad von 42 % aufweist.

EP0433823A1 offenbart kristalline Isocyanatzusammensetzungen erhältlich aus einem hydrierten Diphenylmethandiisocyanat und 2-Methyl-1,3-propandiol.

Thermoplastische aliphatische Polyurethanprepolymere werden in keiner der Druckschriften beschrieben.

Problematisch bei der Herstellung von thermoplastischen aliphatischen Polyurethanprepolymeren ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung, bspw. durch eine Verfärbung, bis hin zur Rückbildung von Monomeren und zur Zerstörung (Veraschung) des Polyurethanprepolymers führt.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können. Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

DE 10 2011 085 944 A1 beschreibt ein Verfahren zur Herstellung von thermoplastischem Polyurethan mit niedrigem Schmelzpunkt in einem Kreislaufreaktor. Die für das Verfahren benötigten hohen Reaktionstemperaturen fördern die Bildung von Allophanaten und erschweren die Abfuhr der Reaktionswärme von Umsetzungen mit hoher Wärmetönung bzw. machen eine Wärmeabfuhr unmöglich.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Exothermie der Reaktion aufweisen (≤ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Es ist Aufgabe der vorliegenden Erfindung ein thermoplastisches aliphatisches Polyurethanprepolymer mit einer geringeren Kristallisationsenthalpie und einer geringeren Kristallisationstemperatur bereitzustellen, als ein vergleichbares thermoplastisches aliphatisches Prepolymer sowie ein Verfahren zu dessen Herstellung.

Diese Aufgabe wurde gelöst durch ein thermoplastisches aliphatisches Polyurethanprepolymer, dadurch gekennzeichnet, dass das Verhältnis $\overline{M}_z$ / $\overline{M}_w$ des thermoplastischen aliphatischen Polyurethanprepolymers in einem Bereich von 2,3 bis 6 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde und das thermoplastische aliphatische Polyurethanprepolymer einen Kristallinitätsgrad $\chi$ im Bereich von 10 % bis 55 % aufweist, wobei der Kristallinitätsgrad $\chi$ gemäß der folgenden Gleichung bestimmt wird:

$$\chi = (\Delta H_{C,Prepolymer} / \Delta H_{Kristall,100\%}) \cdot 100\%,$$

wobei $\Delta H_{C,Prepolymer}$ die gemessene Kristallisationsenthalpie in [J/g] des thermoplastischen aliphatischen Polyurethanprepolymers ist, ermittelt mit Dynamischer Differenzkalorimetrie gemäß DIN EN ISO 11357-1:2017-02 mit einer Kühlrate von 20 K/min im Bereich von 210 °C bis 20 °C, und

$\Delta H_{Kristall,100\%}$ die gemessene Schmelzenthalpie des entsprechenden zu 100 % kristallinen thermoplastischen aliphatischen Polyurethanprepolymers in [J/g] ist, ermittelt mit Dynamischer Differenzkalorimetrie und Röntgenstreuanalyse. Hierzu wird die Schmelzenthalpie der Probe durch Dynamische Differenzkalorimetrie (DSC) gemessen und die Kristallinität der Probe mittels Röntgenstreuung ermittelt. Die Schmelzenthalpie wird vorzugsweise mit Dynamischer Differenzkalorimetrie gemäß ermittelt. Das Verhältnis der beiden Werte entspricht dann $\Delta H_{Kristall,100\%}$, gemäß der Literatur (Kajiyama, T.; MacKnight, W.J.; Polymer Journal, volume 1, 548-554 (1970)).

Es wurde überraschend gefunden, dass die erfindungsgemäßen thermoplastischen aliphatischen Polyurethanprepolymere eine deutlich geringere Kristallisationsenthalpie und Kristallisationstemperatur aufweisen als vergleichbare thermoplastische Polyurethanprepolymere mit gleichem Schmelzpunkt, welche mit einem herkömmlichen Batch-Verfahren hergestellt wurden. Dies führt dazu, dass die Energie, die bei der Kristallisation des erfindungsgemäßen Prepolymers frei wird, geringer ist als bei vergleichbaren nicht-erfinderischen Prepolymeren und hat den Vorteil, dass es zu einem geringeren Schrumpf und damit zu höherer Maßhaltigkeit bei der Weiterverarbeitung, beispielsweise der Extrusion oder dem Spritzguss kommt. Ferner hat dies den Vorteil, dass die Energie, die zum Aufschmelzen der erfindungsgemäßen thermoplastischen aliphatischen Prepolymere benötigt wird, deutlich geringer ist, als bei vergleichbaren thermoplastischen Polyurethanprepolymeren. Das breite Verarbeitungsfenster durch die niedrigere Kristallisationstemperatur ist vorteilhaft, wenn während der Verarbeitung das Prepolymer oder ein aus dem Prepolymer hergestelltes Polymer für eine längere Zeit im schmelzflüssigen Zustand gehalten werden muss, wie beispielsweise bei großen Spritzgussbauteilen, im Mikrospritzguss oder erfahrungsgemäß beim Extrusionsschäumen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Unter "aliphatisch" oder "aliphatischer Rest" werden im Sinne der Erfindung azyklische gesättigte Kohlenwasserstoffreste verstanden, die verzweigt oder linear sowie vorzugsweise unsubstituiert sind. Diese aliphatischen Kohlenwasserstoffreste enthalten vorzugsweise 2, 3, 4, 5 oder 6 Kohlenstoffatome.

Bevorzugt bedeuten erfindungsgemäß die Ausdrücke "umfassend" oder "enthaltend", "im Wesentlichen bestehend aus" und besonders bevorzugt "bestehend aus".

Der Kristallinitätsgrad $\chi$ wird mittels Dynamischer Differenzkalorimetrie (DSC, Gerät DSC 8500, Fa Perkin Elmer) gemäß DIN EN ISO 11357-1:2017-02 mit einer Kühlrate von 20 K/min im Bereich von 210 °C bis 20 °C ermittelt und nach folgender Gleichung bestimmt:

$$\chi = (\Delta H_{C,Prepolymer} / \Delta H_{Kristall,100\%}) \cdot 100\%,$$

wobei $\Delta H_{C,Prepolymer}$ die gemessene Kristallisationsenthalpie in [J/g] des thermoplastischen aliphatischen Polyurethanprepolymers ist, ermittelt mit Dynamischer Differenzkalorimetrie gemäß DIN EN ISO 11357-1:2017-02 mit einer Kühlrate von 20 K/min im Bereich von 210 °C bis 20 °C unter Stickstoffatmosphäre und $\Delta H_{Kristall,100\%}$ die gemessene Schmelzenthalpie des entsprechenden zu 100 % kristallinen thermoplastischen aliphatischen Polyurethanprepolymers in [J/g] ist, ermittelt mit Dynamischer Differenzkalorimetrie und Röntgenstreuanalyse. Hierzu wird die Schmelzenthalpie der Probe durch Dynamische Differenzkalorimetrie (DSC) gemessen und die Kristallinität der Probe mittels Röntgenstreuung ermittelt. Das Verhältnis der beiden Werte entspricht dann $\Delta H_{Kristall,100\%}$, gemäß der Literatur (Kajiyama, T.; MacKnight, W.J.; Polymer Journal, volume 1, 548-554 (1970)).

Für ein Prepolymer aufgebaut aus 1,6-Diisocyanatohexan (HDI) und 1,4-Butandiol ist in der Literatur (Kajiyama, T.; MacKnight, W.J.; Polymer Journal, volume 1, 548-554 (1970)) ein Wert für $\Delta H_{Kristall,100\%}$ von 188 J/g bestimmt worden ermittelt nach dem oben beschriebenen Verfahren.

Falls nicht explizit anders angegeben, werden in der vorliegende Erfindung das Zentrifugenmittel der Molmasse $\overline{M}_z$, das Massenmittel der Molmasse $\overline{M}_w$ und das Zahlenmittel der Molmasse $\overline{M}_n$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 µm Chromatographiesäule, dann über eine 300 Å PSS PFG 7 µm Chromatographiesäule und zuletzt über eine 100 Å PSS PFG 7 µm Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \quad \text{in g/mol}$$

wobei:

$M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i} \quad \text{in g/mol}$$

wobei:

$M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.

Das Zahlenmittel der Molmasse $\overline{M}_n$ wurde ebenfalls aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei:

$M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.

Falls nicht explizit anders angegeben, wird die Kristallisationstemperatur mittels Dynamischer Differenzkalorimetrie (DSC) gemäß DIN EN ISO 11357-1:2017-02 bestimmt. Die Messung erfolgt an einer DSC 8500 (Perkin Elmer). Es werden zwei Aufheizungen und die Abkühlung im Bereich 20 °C bis 210 °C mit einer Heiz-/Kühlrate von 20 K/min durchgeführt. Das Peakminimum der DSC Kühlkurve (exotherm nach unten) wird als Kristallisationstemperatur definiert.

Zur Herstellung der erfindungsgemäßen thermoplastischen aliphatischen Prepolymere werden eine oder mehrere aliphatische Polyisocyanate mit einem oder mehreren aliphatischen Polyolen umgesetzt.

Als aliphatische Polyisocyanate eignen sich alle dem Fachmann bekannten aliphatischen Polyisocyanate, insbesondere monomere aliphatische Diisocyanate. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Die Polyisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,8-Diisocyanatooctan und 1,10-Diisocyanatodecan.

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In einer bevorzugten Ausführungsform ist das eine oder sind die mehreren aliphatischen Polyisocyanate ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Polyisocyanate eingesetzt. In einer weiteren bevorzugten Aufführungsform wird nur 1,6-Diisocyanatohexan als aliphatisches Polyisocyanate eingesetzt.

Als aliphatische Polyole eignen sich alle dem Fachmann bekannten organische Diole, die ein Molekulargewicht von 62 g/mol bis 210 g/mol, vorzugsweise Diole, die ein Molekulargewicht im Bereich von 62 g/mol bis 120 g/mol aufweisen. Die Diole und / oder deren Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus. Vorzugsweise werden keinen verzweigten aliphatischen Diole eingesetzt

In einer bevorzugten Ausführungsform ist das eine oder sind die mehreren aliphatischen Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole eingesetzt. In einer weiteren bevorzugten Aufführungsform werden 1,4-Butandiol und / oder 1,6-Hexandiol als aliphatische Diole eingesetzt. In einer anderen bevorzugten Aufführungsform wird nur 1,4-Butandiol als aliphatisches Diol eingesetzt.

Die Umsetzung der eine oder mehrere aliphatische Polyisocyanate mit einem oder mehreren aliphatischen Polyolen zur Erzeugung des erfindungsgemäßen thermoplastischen aliphatischen Polyurethanprepolymers kann in Gegenwart von einem oder mehreren Katalysatoren stattfinden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-% bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer bevorzugten Ausführungsform weist das erfindungsgemäße thermoplastische aliphatische Polyurethanprepolymer einen Kristallinitätsgrad $\chi$ im Bereich von 20 % bis 55 %, bevorzugt im Bereich von 30 % bis 53 % auf.

In einer weiteren bevorzugten Ausführungsform liegt das Verhältnis $\overline{M}_w$ / $\overline{M}_n$ des erfindungsgemäßen thermoplastischen aliphatischen Polyurethanprepolymers in einem Bereich von 4 bis 10, vorzugsweise in einem Bereich von 5 bis 9, besonders bevorzugt in einem Bereich von 6 bis 8, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform liegt das Verhältnis $\overline{M}_z$ / $\overline{M}_w$ des erfindungsgemäßen thermoplastischen aliphatischen Polyurethanprepolymers in einem Bereich von 2,3 bis 5 vorzugsweise in einem Bereich von 2,3 bis 4, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform ist das erfindungsgemäße thermoplastische aliphatische Polyurethanprepolymer ein Hydroxy-terminiertes thermoplastisches aliphatisches Polyurethanprepolymer.

In einer weiteren bevorzugten Ausführungsform ist das erfindungsgemäße thermoplastische aliphatische Polyurethanprepolymer durch Umsetzung von einem oder mehreren aliphatischen Polyisocyanatmonomeren mit einem oder mehreren aliphatischen Polyolmonomeren erhältlich und der durchschnittliche Polymerisationsgrad n des thermoplastischen aliphatischen Polyurethanprepolymers liegt in einem Bereich von 1,5 bis 19, bevorzugt im Bereich von 2 bis 9 und besonders bevorzugt im Bereich von 3,2 bis 6, wobei der durchschnittliche Polymerisationsgrad $n = \frac{x}{1-x}$ ist und wobei *x* das Verhältnis der NCO-Gruppen der eingesetzten Polyisocyanatmonomere zu den Hydroxy-Gruppen der eingesetzten Polyolmonomere ist.

Vorzugsweise werden als aliphatische Polyisocyanatmonomere aus 1,4-Diisocyanatobutan (BDI), 1,5-Diisocyanatopentan (PDI), 1,6-Diisocyanatohexan (HDI) oder eine Mischung von mindestens zwei hieraus, besonders bevorzugt wird 1,6-Diisocyanatohexan (HDI) eingesetzt.

Vorzugsweise werden als aliphatische Polyolmonomere 1,3-Propandiol, 1,4-Butandiol, 1,6-Hexandiol und / oder Mischungen aus mindestens zwei hieraus, besonders bevorzugt wird 1,4-Butandiol eingesetzt. Bevorzugt werden keine verzweigten Polyolmononere eingesetzt.

In einer weiteren bevorzugten Ausführungsform ist das erfindungsgemäße thermoplastische aliphatische Polyurethanprepolymer durch Umsetzung von einem oder mehreren aliphatischen Polyisocyanaten mit einem Molekulargewicht im Bereich von $\geq$ 140 g/mol bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen, vorzugsweise einem oder mehreren aliphatischen Diolen mit einem Molekulargewicht im Bereich von 62 g/mol bis 210 g/mol, besonders bevorzugt einem oder mehreren aliphatischen Diolen mit einem Molekulargewicht im Bereich von 62 g/mol bis 120 g/mol erhältlich.

In einer weiteren bevorzugten Ausführungsform besteht das erfindungsgemäße thermoplastische aliphatische Polyurethanprepolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol, bezogen auf die Gesamtmasse des thermoplastischen aliphatischen Polyurethanprepolymers. Bei der Ermittlung des Anteils des Reaktionsprodukts der Umsetzung von 1,6-Hexamethylendiisocyanat mit 1,4-Butandiol werden nur die polymeren Bestandteile betrachtet, bezogen auf die Gesamtmasse des polymeren thermoplastischen aliphatischen Polyurethanprepolymers.

Das erfindungsgemäße thermoplastische aliphatische Polyurethanprepolymer, welches aus dem erfindungsgemäßen Verfahren erhalten wurde oder erhältlich ist, kann weiterhin noch nichtreagierte Monomere enthalten bzw. neben diesen im Verfahrensprodukt vorliegen. Dies kommt beispielsweise dann vor, wenn ein Monomer, beispielsweise die Diolkomponente, im Überschuss eingesetzt wird. Die Menge an nicht-reagierten Monomeren liegen vorzugsweise in einem Bereich von 0,13 Gew.-% bis 16 Gew.-%, bevorzugt in einem Bereich von 0,53 Gew-% bis 12 Gew-% und besonders bevorzugt in einem Bereich von 1,5 Gew-% bis 7,7 Gew-% jeweils bezogen auf die Gesamtmasse der Zusammensetzung.

In einer weiteren bevorzugten Ausführungsform weist das erfindungsgemäße thermoplastische aliphatische Polyurethanprepolymer eine aus den Funktionalitäten der Monomere berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf.

In einer weiteren bevorzugten Ausführungsform weist das erfindungsgemäße thermoplastische aliphatische Polyurethanprepolymer eine Kristallisationstemperatur von > 110 °C auf, vorzugsweise eine Kristallisationstemperatur im Bereich von 120 °C bis 135 °C auf, besonders bevorzugt eine Kristallisationstemperatur im Bereich von 125 °C bis 133 °C auf, bestimmt mit Dynamischer Differenzkalorimetrie (DSC) gemäß DIN EN ISO 11357-1:2017-02.

Eine weiterer Gegenstand der Erfindung betrifft ein Verfahren zur Herstellung eines erfindungsgemäßen thermoplastischen aliphatischen Polyurethanprepolymers wobei zumindest ein oder mehrere aliphatische Polyisocyanate mit einem oder mehreren aliphatischen Polyolen zur Reaktion gebracht werden, gegebenenfalls in Gegenwart eines Katalysators und/ oder Hilfs- und Zusatzstoffen, wobei das molare NCO/OH-Verhältnis im Bereich von 0,6 : 1,0 bis 0,95 : 1,0 liegt.

Bei Hilfs- und Zusatzstoffen kann es sich beispielsweise um im Bereich der Thermoplasttechnologie gängige Hilfs- und Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Hilfs- und Zusatzstoffe handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Hilfs- und Zusatzstoffe mehrerer Typen zu verwenden.

In einer bevorzugten Ausführungsform des erfindungsgemäßen Verfahrens werden unabhängig voneinander als aliphatisches Polyisocyanat ein aliphatisches Diisocyanat eingesetzt, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter als aliphatisches Polyisocyanat 1,6-Diisocyanatohexan (HDI) eingesetzt wird, und als aliphatisches Polyol ein aliphatisches Diol eingesetzt, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter als aliphatisches Polyol 1,4-Butandiol eingesetzt wird.

Das erfindungsgemäße Verfahren kann in einen Schlaufenreaktor (Loop-Reactor) oder in einen Mischer beispielsweise in einem Statikmischer durchgeführt werden. Vorzugsweise wird das erfindungsgemäße Verfahren kann in einen Schlaufenreaktor (Loop-Reactor) durchgeführt. Das erfindungsgemäße Verfahren ist vorzugsweise ein kontinuierliches Verfahren.

Eine weitere Ausführungsform der Erfindung betrifft ein thermoplastisches aliphatisches Polyurethanprepolymer erhältlich oder erhalten durch das erfindungsgemäße Verfahren.

Eine weitere Ausführungsform der Erfindung betrifft eine Zusammensetzung enthaltend mindestens ein erfindungsgemäßes thermoplastisches aliphatisches Polyurethanprepolymer und ein Additiv. Als Additive eigenen sich alle oben genannten Zusatzstoffe und Hilfsstoffe.

Eine weitere Ausführungsform der Erfindung betrifft eine Zusammensetzung enthaltend mindestens ein erfindungsgemäßes thermoplastisches aliphatisches Polyurethanprepolymer und mindestens ein Polyol, vorzugsweise ein Diol, besonders bevorzugt Butandiol, noch bevorzugter 1,4-Butandiol.

Eine weitere Ausführungsform der Erfindung betrifft die Verwendung von erfindungsgemäßen thermoplastischen aliphatischen Polyurethanprepolymer oder einer erfindungsgemäßen Zusammensetzung zur Herstellung von thermoplastischem Polyurethan und / oder thermoplastischen Polyurethan-Dispersionen.

Eine weitere Ausführungsform der Erfindung betrifft ein Polymer erhältlich durch die Umsetzung von mindestens einem erfindungsgemäßen thermoplastischen aliphatischen Polyurethanprepolymer oder einer erfindungsgemäßen Zusammensetzung mit mindestens einem Kettenverlängerer, wobei der Kettenverlängerer vorzugsweise ein Polyisocyanat ist.

Vorzugsweise werden das erfindungsgemäße thermoplastische aliphatische Polyurethanprepolymer oder eine erfindungsgemäße Zusammensetzung mit mindestens einem Kettenverlängerer zu einem Polyurethanpolymer umgesetzt. Wenn es sich bei dem Prepolymer um ein Hydroxy-terminiertes Prepolymere handelt, dann kann dieses mit Hydroxygruppen-reaktiven Kettenverlängerern wie beispielsweise Polyisocyanaten umgesetzt werden. Als Polyisocyanate eigen sich dabei alle dem Fachmann bekannten Polyisocyanate, vorzugsweise aliphatische Polyisocyanate, aromatische Polyisocyanate, cycloaliphatische Polyisocyanate und araliphatische Polyisocyanate. Wenn es sich bei dem Prepolymer um ein NCO-terminierten Prepolymer handelt, dann kann dieses mit NCO-reaktiven Kettenverlängerern wie beispielsweise organischen Diolen, Thiolen, Diaminen und Mischungen aus mindestens zwei hiervon umgesetzt werden. Geeignete organische Diole, Thiole und Diamine sind dem Fachmann bekannt. Die Umsetzung des Prepolymers mit dem Ketternverlängerer zum Polymer kann beispielsweise in einem Extruder erfolgen.

Eine weitere Ausführungsform der Erfindung betrifft einen Artikel umfassend oder enthaltend ein erfindungsgemäßes Polymer, ein erfindungsgemäßes thermoplastisches aliphatisches Polyurethanprepolymer oder eine erfindungsgemäße Zusammensetzung.

**Die Erfindung betrifft insbesondere die folgenden Ausführungsformen:**

In einer ersten Ausführungsform betrifft die Erfindung ein thermoplastisches aliphatisches Polyurethanprepolymer, dadurch gekennzeichnet, dass das Verhältnis $\overline{M}_z$ / $\overline{M}_w$ des thermoplastischen aliphatischen Polyurethanprepolymers in einem Bereich von 2,3 bis 6 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde und das thermoplastisches aliphatisches Polyurethanprepolymer einen Kristallinitätsgrad $\chi$ im Bereich von 10 % bis 55 % aufweist, wobei der Kristallinitätsgrad $\chi$ gemäß der folgenden Gleichung bestimmt wird:

$$\chi = (\Delta H_{C,\text{Prepolymer}} / \Delta H_{\text{Kristall},100\%}) \cdot 100\%,$$

wobei $\Delta H_{C,Prepolymer}$ die gemessene Kristallisationsenthalpie in [J/g] des thermoplastischen aliphatischen Polyurethanprepolymers ist, ermittelt mit Dynamischer Differenzkalorimetrie (DSC) gemäß DIN EN ISO 11357-1:2017-02 mit einer Kühlrate von 20 K/min im Bereich von 210 °C bis 20 °C, und

$\Delta H_{Kristall,100\%}$ die Schmelzenthalpie des entsprechenden zu 100 % kristallinen thermoplastischen aliphatischen Polyurethanprepolymers in [J/g] ist, ermittelt mit Dynamischer Differenzkalorimetrie und Röntgenstreuanalyse.

In einer zweiten Ausführungsform betrifft die Erfindung ein thermoplastisches aliphatisches Polyurethanprepolymer nach Ausführungsform 1, wobei das thermoplastische aliphatische Polyurethanprepolymer einen Kristallinitätsgrad $\chi$ im Bereich von 20 % bis 55 %, bevorzugt im Bereich von 30 % bis 53 % aufweist.

In einer dritten Ausführungsform betrifft die Erfindung ein thermoplastisches aliphatisches Polyurethanprepolymer nach einer der Ausführungsformen 1 oder 2, wobei das thermoplastische aliphatische Polyurethanprepolymer ein massengemitteltes Molekulargewicht $\overline{M}_w$ in einem Bereich von 4000 g/mol bis 11000 g/mol, vorzugsweise in einem Bereich von 6000 g/mol bis 11000 g/mol, besonders bevorzugt in einem Bereich von 8000 g/mol bis 11000 g/mol aufweist, ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer vierten Ausführungsform betrifft die Erfindung ein thermoplastisches aliphatisches Polyurethanprepolymer nach einer der Ausführungsformen 1 bis 3, wobei das Verhältnis $\overline{M}_w$ / $\overline{M}_n$ des thermoplastischen aliphatischen Polyurethanprepolymers in einem Bereich von 4 bis 10, vorzugsweise in einem Bereich von 5 bis 9, besonders bevorzugt in einem Bereich von 6 bis 8 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer fünften Ausführungsform betrifft die Erfindung ein thermoplastisches aliphatisches Polyurethanprepolymer nach einer der Ausführungsformen 1 bis 4, wobei das Verhältnis $\overline{M}_z$ / $\overline{M}_w$ des thermoplastischen aliphatischen Polyurethanprepolymers in einem Bereich von 2,3 bis 5 vorzugsweise in einem Bereich von 2,3 bis 4 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer sechsten Ausführungsform betrifft die Erfindung ein thermoplastisches aliphatisches Polyurethanprepolymer nach einer der Ausführungsformen 1 bis 5, wobei das thermoplastische aliphatische Polyurethanprepolymer ein Hydroxy-terminiertes thermoplastisches aliphatisches Polyurethanprepolymer ist.

In einer siebten Ausführungsform betrifft die Erfindung ein thermoplastisches aliphatisches Polyurethanprepolymer nach einer der Ausführungsformen 1 bis 6, wobei das thermoplastische aliphatische Polyurethanprepolymer durch Umsetzung von einem oder mehreren aliphatischen Polyisocyanatmonomeren mit einem oder mehreren aliphatischen Polyolmonomeren erhältlich ist und wobei der durchschnittliche Polymerisationsgrad n des thermoplastischen aliphatischen Polyurethanprepolymers in einem Bereich von 1,5 bis 19, bevorzugt im Bereich von 2 bis 9 und besonders bevorzugt im Bereich von 3,2 bis 6 liegt, wobei der durchschnittliche Polymerisationsgrad $n = \frac{x}{1-x}$ ist und wobei $x$ das Verhältnis der NCO-Gruppen der eingesetzten Polyisocyanatmonomere zu den Hydroxy-Gruppen der eingesetzten Polyolmonomere ist.

In einer achten Ausführungsform betrifft die Erfindung ein thermoplastisches aliphatisches Polyurethanprepolymer nach einer der Ausführungsformen 1 bis 7, wobei als aliphatische Polyisocyanatmonomere aus 1,4-Diisocyanatobutan (BDI), 1,5-Diisocyanatopentan (PDI), 1,6-Diisocyanatohexan (HDI) oder eine Mischung von mindestens zwei hieraus, besonders bevorzugt wird 1,6-Diisocyanatohexan (HDI) eingesetzt werden.

In einer neunten Ausführungsform betrifft die Erfindung ein thermoplastisches aliphatisches Polyurethanprepolymer nach einer der Ausführungsformen 1 bis 8, wobei als aliphatische Polyolmonomere 1,3-Propandiol, 1,4-Butandiol, 1,6-Hexandiol und / oder Mischungen aus mindestens zwei hieraus, besonders bevorzugt wird 1,4-Butandiol eingesetzt werden.

In einer zehnten Ausführungsform betrifft die Erfindung ein thermoplastisches aliphatisches Polyurethanprepolymer nach einer der Ausführungsformen 1 bis 9, wobei das thermoplastische aliphatische Polyurethanprepolymer durch Umsetzung von einem oder mehreren aliphatischen Polyisocyanaten mit einem Molekulargewicht im Bereich von $\geq$ 140 bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen, vorzugsweise einem oder mehreren aliphatischen Diolen mit einem Molekulargewicht im Bereich von 62 g/mol bis 210 g/mol, besonders bevorzugt einem oder mehreren aliphatischen Diolen mit einem Molekulargewicht im Bereich von 62 g/mol bis 120 g/mol erhältlich ist.

In einer elften Ausführungsform betrifft die Erfindung ein thermoplastisches aliphatisches Polyurethanprepolymer nach einer der Ausführungsformen 1 bis 10, wobei das thermoplastische aliphatische Polyurethanprepolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanprepolymers.

In einer zwölften Ausführungsform betrifft die Erfindung ein thermoplastisches aliphatisches Polyurethanprepolymer nach einer der Ausführungsformen 1 bis 11, wobei die Umsetzung der aliphatischen Polyolmonomere mit den aliphatischen Polyisocyanatmonomeren zum thermoplastischen aliphatischen Polyurethanprepolymer katalysatorfrei durchgeführt wird.

In einer dreizehnten Ausführungsform betrifft die Erfindung ein thermoplastisches aliphatisches Polyurethanprepolymer nach einer der Ausführungsformen 1 bis 12, wobei das thermoplastische aliphatische Polyurethanprepolymer eine aus den Funktionalitäten der Monomere berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 aufweist.

In einer vierzehnten Ausführungsform betrifft die Erfindung ein thermoplastisches aliphatisches Polyurethanprepolymer nach einer der Ausführungsformen 1 bis 13, wobei das thermoplastische aliphatische Polyurethanprepolymer eine Kristallisationstemperatur von > 110 °C aufweist, vorzugsweise eine Kristallisationstemperatur im Bereich von 120 °C bis 135 °C aufweist, besonders bevorzugt eine Kristallisationstemperatur im Bereich von 125 °C bis 133 °C aufweist, bestimmt mit Dynamischer Differenzkalorimetrie (DSC) gemäß DIN EN ISO 11357-1:2017-02.

In einer fünfzehnten Ausführungsform betrifft die Erfindung ein Verfahren zur Herstellung eines thermoplastischen aliphatischen Polyurethanprepolymers gemäß einer der Ausführungsformen 1 bis 14 dadurch gekennzeichnet, dass zumindest ein oder mehrere aliphatische Polyisocyanate mit einem oder mehreren aliphatischen Polyolen zur Reaktion gebracht werden, gegebenenfalls in Gegenwart eines Katalysators und/ oder Hilfs- und Zusatzstoffen, wobei das molare NCO/OH-Verhältnis im Bereich von 0,6 : 1,0 bis 0,95 : 1,0 liegt.

In einer sechzehnten Ausführungsform betrifft die Erfindung ein Verfahren gemäß der Ausführungsform 15, wobei als aliphatisches Polyisocyanat ein aliphatisches Diisocyanat eingesetzt wird, vorzugweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter als aliphatisches Polyisocyanat 1,6-Diisocyanatohexan (HDI) eingesetzt wird.

In einer siebzehnten Ausführungsform betrifft die Erfindung ein Verfahren gemäß einer der Ausführungsformen 15 oder 16, wobei als aliphatisches Polyol ein aliphatisches Diol eingesetzt wird, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter als aliphatisches Polyol 1,4-Butandiol eingesetzt wird.

In einer achtzehnten Ausführungsform betrifft die Erfindung ein Verfahren gemäß einer der Ausführungsformen 15 bis 17, wobei das Verfahren in einen Schlaufenreaktor (Loop-Reactor) oder in einen Mischer vorzugsweise in einem Statikmischer durchgeführt wird, besonders bevorzugt wird das erfindungsgemäße Verfahren in einen Schlaufenreaktor (Loop-Reactor) durchgeführt.

In einer neunzehnten Ausführungsform betrifft die Erfindung ein Verfahren gemäß einer der Ausführungsformen 15 bis 18, wobei das Verfahren ein kontinuierliches Verfahren ist.

In einer zwanzigsten Ausführungsform betrifft die Erfindung ein Verfahren gemäß einer der Ausführungsformen 15 bis 18, wobei das Verfahren ein lösungsmittelfreies Verfahren ist.

In einer einundzwanzigsten Ausführungsform betrifft die Erfindung ein thermoplastisches Polyurethanprepolymer erhältlich oder erhalten durch ein Verfahren gemäß einer der Ausführungsformen 15 bis 20.

In einer zweiundzwanzigsten Ausführungsform betrifft die Erfindung eine Zusammensetzung enthaltend mindestens ein thermoplastisches aliphatisches Polyurethanprepolymer nach einem der Ausführungsformen 1 bis 14 und mindestens ein Additiv.

In einer dreiundzwanzigsten Ausführungsform betrifft die Erfindung eine Zusammensetzung enthaltend mindestens ein thermoplastisches aliphatisches Polyurethanprepolymer nach einem der Ausführungsformen 1 bis 14 und mindestens ein Polyol, vorzugsweise ein Diol, besonders bevorzugt Butandiol, noch bevorzugter 1,4-Butandiol.

In einer vierundzwanzigsten Ausführungsform betrifft die Erfindung die Verwendung von thermoplastischem aliphatischen Polyurethanprepolymer nach einem der Ausführungsformen 1 bis 14 oder einer Zusammensetzung nach Ausführungsform 22 oder 23 zur Herstellung von thermoplastischem Polyurethan und / oder thermoplastischen Polyurethan-Dispersionen.

In einer fünfundzwanzigsten Ausführungsform betrifft die Erfindung ein Polymer erhältlich durch die Umsetzung von mindestens einem thermoplastischen aliphatischen Polyurethanprepolymer nach einem der Ausführungsformen 1 bis 14 oder einer Zusammensetzung nach Ausführungsform 22 oder 23 mit mindestens einem Kettenverlängerer, wobei der Kettenverlängerer vorzugsweise ein Polyisocyanat ist.

In einer sechsundzwanzigsten Ausführungsform betrifft die Erfindung die Verwendung eines Polymers nach Ausführungsform 25, eines thermoplastischen aliphatischen Polyurethanprepolymer nach einem der Ausführungsformen 1 bis 14 oder einer Zusammensetzung nach Ausführungsform 22 oder 23 in einem Formgebungsverfahren unter Aufschmelzen des thermoplastischen Polyurethans, insbesondere zur Herstellung von Bauteilen von Fahrzeugen.

In einer siebenundzwanzigsten Ausführungsform betrifft die Erfindung einen Artikel umfassend oder enthaltend ein Polymer nach Ausführungsform 25, ein thermoplastisches aliphatisches Polyurethanprepolymer nach einer der Ausführungsformen 1 bis 14 oder einer Zusammensetzung nach Ausführungsform 22 oder 23.

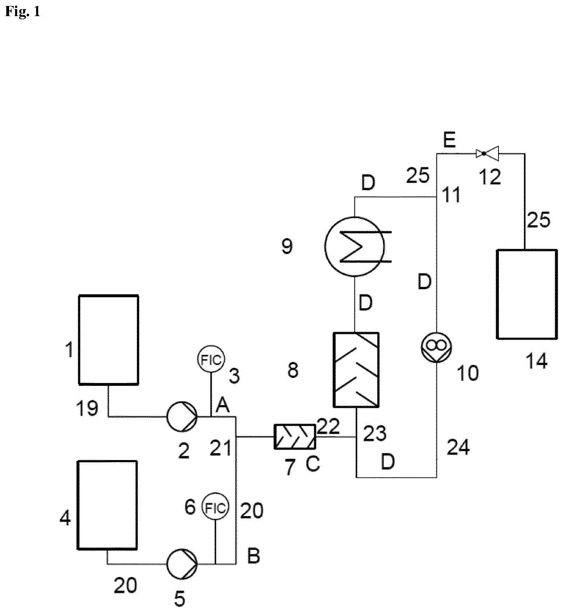

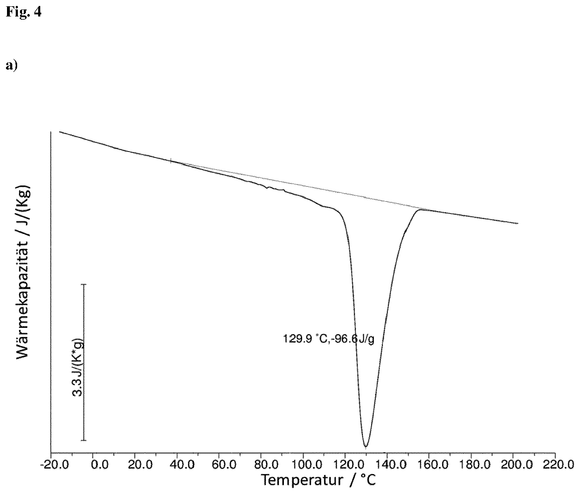

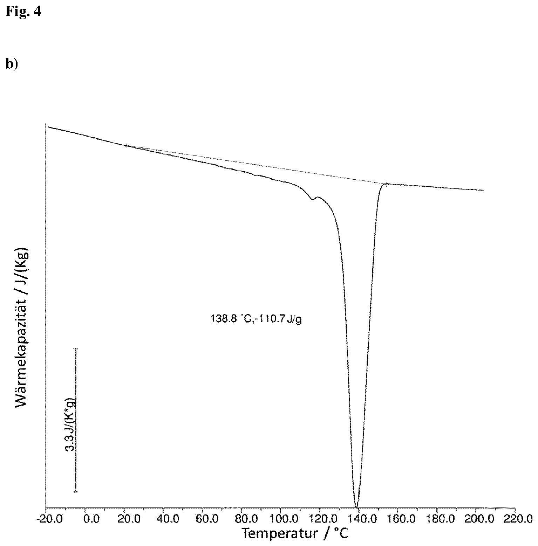

Die vorliegende Erfindung wird im Folgenden anhand der Figuren 1 und 4 näher erörtert. Darin zeigt

Fig.1 eine bevorzugte Vorrichtung zur Durchführung des erfindungsgemäßen Verfahrens,

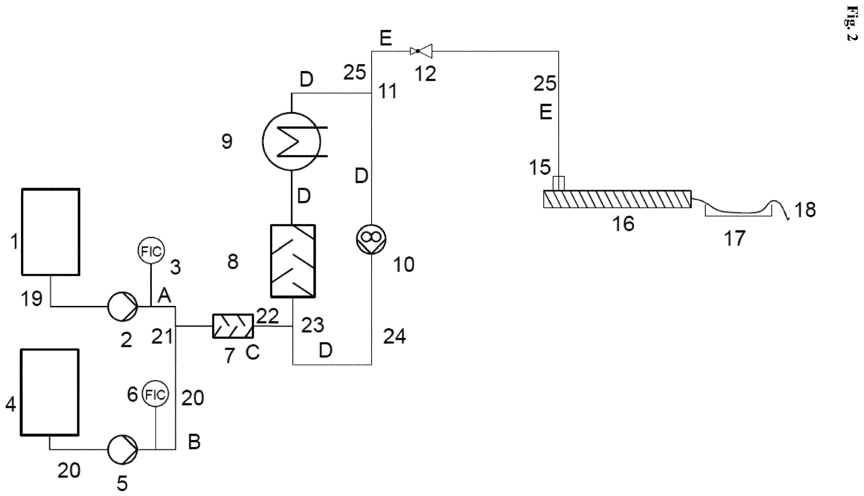

Fig. 2 eine weitere bevorzugte Vorrichtung zur Durchführung des erfindungsgemäßen Verfahrens,

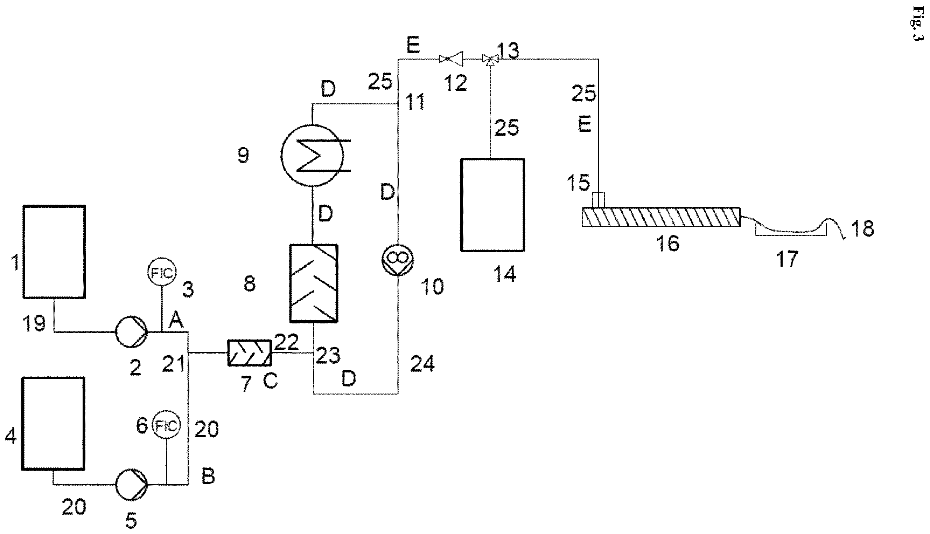

Fig. 3 eine weitere bevorzugte Vorrichtung zur Durchführung des erfindungsgemäßen Verfahrens,

Fig.4 ein Thermogramm aus einer Differentialthermoanalyse eines Polyurethanprepolymers, das a) mit dem erfindungsgemäßen Verfahren hergestellt wurde und b) das nach einem nicht erfindungsgemäßen Verfahren hergestellt wurde.

## Beispiele

Die vorliegende Erfindung wird anhand der nachfolgenden Beispiele weiter erläutert, ohne jedoch darauf beschränkt zu sein.

Es wurden zwei thermoplastische Polyurethanprepolymere miteinander verglichen, die mit unterschiedlichen Syntheseverfahren hergestellt wurden, dabei wurden die Schmelzenthalpie und das Molekulargewicht dieser beiden Polyurethanprepolymere untersucht.

### Bestimmung der Kristallisationsenthalpie

Die Bestimmung der Kristallisationsenthalpie erfolgt mittels Dynamischer Differenzkalorimetrie (engl. Differential scanning calorimetry, DSC) anhand DIN EN ISO 11357-1:2017-02. Die Messung erfolgte an einer DSC 8500 (Perkin Elmer). Es wurden zwei Aufheizungen und die Abkühlung im Bereich 20 °C bis 210 °C mit einer Heiz-/Kühlrate von 20 K/min durchgeführt. Die Probenmasse betrug circa 6 mg. Der Spülgasstrom (Stickstoff) betrug 50 ml/min.

### Bestimmung des Molekulargewichtes

GPC-Methode zur Bestimmung von $M_n$ und $M_w$:
Das Zahlenmittel und das Massenmittel der Molmasse wurden mit Hilfe einer Gelpermeationschromatographie (GPC) bestimmt, wobei die zu untersuchende Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde,.

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7μm, 300 Å PSS PFG 7μm, 100 Å PSS PFG 7μm in dieser Reihenfolge (PSS Polymer Standards Service GmbH) |
| Entgasung: | Degaser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

Falls nicht explizit anders angegeben, wurden in der vorliegende Erfindung das Zentrifugenmittel der Molmasse $M_z$ mittels Gelpermeationschromatographie (GPC) unter Verwendung von Polymethylmethacrylat als Standard bestimmt. Die zu vermessende Probe wurde in einer Lösung von 3 g Kaliumtrifluoracetat in 400 Kubikzentimeter Hexafluorisopropanol aufgelöst (Probenkonzentration ca. 2 mg/Kubikzentimeter) und dann mit einer Flussrate von 1 Kubikzentimeter/Minute über eine Vorsäule gegeben und dann über drei in Reihe geschaltete Chromatographiesäulen getrennt, zuerst über eine 1000 Å PSS PFG 7 μm Chromatographiesäule, dann über eine 300 Å PSS PFG 7 μm Chromatographiesäule und zuletzt über eine 100 Å PSS PFG 7 μm Chromatographiesäule. Als Detektor wurde ein Brechungsindex-Detektor (RI-Detektor) verwendet. Das zahlengemittelte Molekulargewicht wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei,
$M_i$ die molare Masse der Polymere der Fraktion i ist, so dass $M_i < M_{i+1}$ für alle $i$, in g/mol ist, $n_i$ die Stoffmenge des Polymers der Fraktion $i$, in mol ist.

Das zentrifugengemittelte Molekulargewicht wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2},$$

wobei, $M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.

Erfindungsgemäßes Beispiel 1

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom (A) bestehend aus 1,6-Hexamethylendiisocyanat zu einem Statikmischer (7) gefördert. Der Durchsatz des Polyisocyanatstroms (A) wurde mittels eines Massendurchflussmessers (3) (Firma Bronkhorst, Mini Cori-Flow M1X, max. Durchfluss 12 kg/h) gemessen. Die Temperatur des 1,6-Hexamethylendiisocyanats betrug dabei Raumtemperatur.
Aus einer 250 - Liter - Vorlage (4) für 1,4-Butandiol wurde mit Hilfe einer Zahnringpumpe (5) (Firma HNP, MZR 7205) ein Polyolstrom (B) bestehend aus 1,4-Butandiol zum Statikmischer (7) gefördert. Der Durchsatz des Polyolstroms (B) wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer (7) (Sulzer SMX, Durchmesser 6 mm, Verhältnis von Länge zu Durchmesser L/D = 10) wurden der Polyisocyanatstrom (A) und der Polyolstrom (B) miteinander gemischt, so dass ein Mischungsstrom (C) erhalten wurde. Die Massenströme des Polyisocyanatstroms (A) und des Polyolstroms (B) wurden so eingestellt, dass das molare Verhältnis von Isocyanat- zu Hydroxy-Gruppen im Mischungsstrom (C) 0,78 betrug.

Mischungsstrom C wurde über eine Einmündung (23) in die Kreislaufleitung (24) geleitet, in dem ein Kreislaufstrom (D) in einem Kreislauf geführt wurde. Stromabwärts der Einmündung (23) wurde der Kreislaufstrom (D) in einen Statikmischer (8) (Statikmischer äquivalent zu Sulzer SMX, Innendurchmesser 34 mm, L/D=20) geführt. Die Temperatur des Prepolymerstromes (D) betrug 182 °C.

Stromabwärts des Statikmischers (8) wurde der Kreislaufstrom (D) in einen temperierbaren statischen Mischer (9) geführt. Dort fand die Oligomerisierung des Kreislaufstroms (D) mit Mischungsstrom (C) zum großen Teil statt und die entstehende Reaktionswärme wurde abgeführt. Der temperierbare statische Mischer (9) war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer (9) trat der Kreislaufstrom (D) mit einer Temperatur von 183 °C aus. Stromabwärts des temperierbaren statischen Mischers (9) wurde an einer Einmündung (11) ein Prepolymerstrom (E) aus dem Kreislaufstrom (D) abgeteilt und der Kreislaufstrom (D) weiter zu einer Zahnradpumpe (10) geführt. Der Prepolymerstrom (E) wurde in einen in einen Auffangbehälter (14) geleitet.

Der Druck des Kreislaufstroms (D) wurde an einer Zahnradpumpe (10) erhöht. Die Zahnradpumpe (10) (Firma Witte Chem 25,6-3) hatte ein Volumen pro Umdrehung von 25,6 Kubikzentimeter und eine Drehzahl von 50 pro Minute. Der Kreislaufstrom (D) wurde stromabwärts der Pumpe an Einmündung (23) mit dem Mischungsstrom (C) vereinigt, wie bereits beschrieben.

Die Kreislaufleitung (24) bestand aus doppelwandig ausgeführten Rohrleitungen, die mit Thermoöl beheizt waren. Die Heizmitteltemperatur betrug 182 °C. Der Statikmischer (8), der temperierbare statischen Mischer (9) und die Zahnradpumpe (10) bestanden aus Apparaten, die mit Thermoöl beheizt waren. Die Heizmitteltemperatur betrug 182 °C.

Hinter dem Druckhalteventil (12) wurde der Strom (E) in einen Auffangbehälter (14), ein offenes 200-Liter-Metallfass mit Absaugung, gefahren.

Tabelle 1: Stoffströme bei der Herstellung des TPU in Beispiel 1

| | [kg/h] |
|---|---|
| Strom A (HDI) | 2,909 |
| Strom B (BDO) | 2,001 |
| | |
| Strom E (Prepolymer) | 120 |

Referenzbeispiel 2:

In einem Rührkessel (250 ml) wurden 60,16 g 1,4-Butandiol für 30 Minuten unter Rühren (170 Umdrehung pro Minute (U/min)) und Stickstoffeinleitung auf 90 °C geheizt. Anschließend wurde über einen Zeitraum von 45 Minuten 89,79 g 1,6-Hexamethylendiisocyanat kontinuierlich zu dem 1,4-Butandiol dosiert. Hierbei wurde die Temperatur des Reaktionsgemisches konstant um 4 °C pro Minute erhöht, bis eine Temperatur von 190 °C erreicht wurde (25 Minuten). Sobald eine Produkttemperatur von 190 °C erreicht wurde, wurde die Geschwindigkeit des Rührers auf 300 U/min erhöht. Die Temperatur im Rührkessel wurde konstant zwischen 190 °C und 200 °C gehalten.

Nach Ende der 1,6-Hexamethylendiisocyanat Dosierung wurde die Schmelze weitere 5 Minuten gerührt. Anschließend wurde sie im heißen Zustand in eine Aluminiumform gegossen.

Ergebnisse

Die Schmelzenthalpie und die Molekulargewichte der aus den Beispielen 1 und 2 erhaltenen thermoplastischen Polyurethane wurden nach den oben beschriebenen Verfahren untersucht. Die Ergebnisse sind in Tabelle 2 zusammengefasst:

Tabelle 2: Schmelzenthalpie und Molekulargewicht der erhaltenen Polyurethane

| | **Erfindungsgemäß Beispiel 1** | **Vergleich Beispiel 2** |
|---|---|---|
| **Kristallisationsenthalpie $\Delta H_C$ [J/g]** | 96,6 | 110,7 |
| **Kristallisationstemperatur [C°]** | 129,9 | 138,8 |
| **$\Delta H_{Kristall,100\%}$ [J/g]** | 188 | 188 |
| **Kristallinitätsgrad $\chi$ [%]** | 51,4 | 58,9 |
| **$\overline{M}_n$ [g/mol]** | 1305 | 1490 |
| **$\overline{M}_w/\overline{M}_n$** | 7,94 | 2,55 |
| **$\overline{M}_z/\overline{M}_w$** | 2,64 | 1,74 |
| **$\overline{M}_w$ [g/mol]** | 10360 | 3802 |
| **$\overline{M}_z$ [g/mol]** | 27350 | 6615 |

**Bezugszeichenliste**

- (A) Polyisocyanatstrom
- (B) Polyolstrom
- (C) Mischungsstrom
- (D) Kreislaufstrom
- (E) Prepolymerstrom
- (1) Polyisocyanat-Vorratsbehälter
- (2) erste Fördereinrichtung
- (3) erster Massendurchflussmesser
- (4) Polyol-Vorratsbehälter
- (5) zweite Fördereinrichtung
- (6) zweiter Massendurchflussmesser
- (7) erste Mischungseinrichtung
- (8) zweite Mischungseinrichtung
- (9) temperierbare Mischungseinrichtung
- (10) temperierbare Fördereinrichtung
- (11) dritte Einmündung
- (12) Druckregelventil
- (13) Dreiwegeventil
- (14) Auffangbehälter
- (15) Entlüftungseinrichtung

(16) Extruder
(17) Kühlungseinrichtung
(18) Zerkleinerungseinrichtung
(19) Polyisocyanatleitung
(20) Polyolleitung
(21) zweite Einmündung
(22) Kreislaufzuführungsleitung
(23) dritte Einmündung
(24) Kreislaufleitung
(25) Prepolymerzuführungsleitung

**Patentansprüche**

1. Thermoplastisches aliphatisches Polyurethanprepolymer, **dadurch gekennzeichnet, dass** das Verhältnis $\overline{M}_z$ / $\overline{M}_w$ des thermoplastischen aliphatischen Polyurethanprepolymers in einem Bereich von 2,3 bis 6 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde und das thermoplastisches aliphatisches Polyurethanprepolymer einen Kristallinitätsgrad $\chi$ im Bereich von 10 % bis 55 % aufweist, wobei der Kristallinitätsgrad $\chi$ gemäß der folgenden Gleichung bestimmt wird:

$$\chi = (\Delta H_{C,Prepolymer}/\Delta H_{Kristall,100\%}) \cdot 100\%,$$

wobei $\Delta H_{C,Prepolymer}$ die gemessene Kristallisationsenthalpie in [J/g] des thermoplastischen aliphatischen Polyurethanprepolymers ist, ermittelt mit Dynamischer Differenzkalorimetrie (DSC) gemäß DIN EN ISO 11357-1:2017-02 mit einer Kühlrate von 20 K/min im Bereich von 210 °C bis 20 °C, und
$\Delta H_{Kristall,100\%}$ die Schmelzenthalpie des entsprechenden zu 100 % kristallinen thermoplastischen aliphatischen Polyurethanprepolymers in [J/g] ist, ermittelt mit Dynamischer Differenzkalorimetrie und Röntgenstreuanalyse.

2. Thermoplastisches aliphatisches Polyurethanprepolymer nach Anspruch 1, **dadurch gekennzeichnet, dass** das thermoplastische aliphatische Polyurethanprepolymer einen Kristallinitätsgrad $\chi$ im Bereich von 20 % bis 55 %, bevorzugt im Bereich von 30 % bis 53 % aufweist.

3. Thermoplastisches aliphatisches Polyurethanprepolymer nach Anspruch 1 oder 2, **dadurch gekennzeichnet, dass** das Verhältnis $\overline{M}_w$ / $\overline{M}_n$ des thermoplastischen aliphatischen Polyurethanprepolymers in einem Bereich von 4 bis 10, vorzugsweise in einem Bereich von 5 bis 9, besonders bevorzugt in einem Bereich von 6 bis 8 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

4. Thermoplastisches aliphatisches Polyurethanprepolymer nach einem der Ansprüche 1 bis 3, **dadurch gekennzeichnet, dass** das Verhältnis $\overline{M}_z$ / $\overline{M}_w$ des thermoplastischen aliphatischen Polyurethanprepolymers in einem Bereich von 2,3 bis 5 vorzugsweise in einem Bereich von 2,3 bis 4 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

5. Thermoplastisches aliphatisches Polyurethanprepolymer nach einem der Ansprüche 1 bis 4, **dadurch gekennzeichnet, dass** das thermoplastische aliphatische Polyurethanprepolymer ein Hydroxy-terminiertes thermoplastisches aliphatisches Polyurethanprepolymer ist.

6. Thermoplastisches aliphatisches Polyurethanprepolymer nach einem der Ansprüche 1 bis 5, **dadurch gekennzeichnet, dass** das thermoplastische aliphatische Polyurethanprepolymer durch Umsetzung von einem oder mehreren aliphatischen Polyisocyanatmonomeren mit einem oder mehreren aliphatischen Polyolmonomeren erhältlich ist und wobei der durchschnittliche Polymerisationsgrad n des thermoplastischen aliphatischen Polyurethanprepolymers in einem Bereich von 1,5 bis 19, bevorzugt im Bereich von 2 bis 9 und besonders bevorzugt im Bereich von 3,2 bis 6 liegt, wobei der durchschnittliche Polymerisationsgrad $n = \frac{x}{1-x}$ ist und wobei *x* das Verhältnis der NCO-Gruppen der eingesetzten Polyisocyanatmonomere zu den Hydroxy-Gruppen der eingesetzten Polyolmonomere ist.

7. Thermoplastisches aliphatisches Polyurethanprepolymer nach einem der Ansprüche 1 bis 6, **dadurch gekennzeichnet, dass** das thermoplastische aliphatische Polyurethanprepolymer durch Umsetzung von einem oder mehreren aliphatischen Polyisocyanaten mit einem Molekulargewicht im Bereich von ≥ 140 g/mol bis ≤ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen, vorzugsweise einem oder mehreren aliphatischen Diolen mit einem Molekulargewicht im Bereich von 62 g/mol bis 210 g/mol, besonders bevorzugt einem oder mehreren aliphatischen Diolen mit einem Molekulargewicht im Bereich von 62 g/mol bis 120 g/mol erhältlich ist.

8. Thermoplastisches aliphatisches Polyurethanprepolymer nach einem der Ansprüche 1 bis 7, **dadurch gekennzeichnet, dass** das thermoplastische aliphatische Polyurethanprepolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanprepolymers.

9. Thermoplastisches aliphatisches Polyurethanprepolymer nach einem der Ansprüche 1 bis 8, **dadurch gekennzeichnet, dass** das thermoplastische aliphatische Polyurethanprepolymer eine aus den Funktionalitäten der Monomere berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 aufweist.

10. Thermoplastisches aliphatisches Polyurethanprepolymer nach einem der Ansprüche 1 bis 9, **dadurch gekennzeichnet, dass** das thermoplastische aliphatische Polyurethanprepolymer eine Kristallisationstemperatur von > 110 °C aufweist, vorzugsweise eine Kristallisationstemperatur im Bereich von 120 °C bis 135 °C aufweist, besonders bevorzugt eine Kristallisationstemperatur im Bereich von 125 °C bis 133 °C aufweist, bestimmt mit Dynamischer Differenzkalorimetrie (DSC) gemäß DIN EN ISO 11357-1:2017-02.

11. Verfahren zur Herstellung eines thermoplastischen aliphatischen Polyurethanprepolymers nach einem der Ansprüche 1 bis 10 **dadurch gekennzeichnet, dass** zumindest ein oder mehrere aliphatische Polyisocyanate mit einem oder mehreren aliphatischen Polyolen zur Reaktion gebracht werden, gegebenenfalls in Gegenwart eines Katalysators und/ oder Hilfs- und Zusatzstoffen, wobei das molare NCO/OH-Verhältnis im Bereich von 0,6 : 1,0 bis 0,95 : 1,0 liegt.

12. Verfahren nach Anspruch 11, **dadurch gekennzeichnet, dass** unabhängig voneinander als aliphatisches Polyisocyanat ein aliphatisches Diisocyanat eingesetzt wird, vorzugweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter wobei als aliphatisches Polyisocyanat 1,6-Diisocyanatohexan (HDI) eingesetzt wird, und als aliphatisches Polyol ein aliphatisches Diol eingesetzt wird, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter als aliphatisches Polyol 1,4-Butandiol eingesetzt wird.

13. Zusammensetzung enthaltend mindestens ein thermoplastisches aliphatisches Polyurethanprepolymer nach einem der Ansprüche 1 bis 10 und mindestens ein Additiv.

**14.** Zusammensetzung enthaltend mindestens ein thermoplastisches aliphatisches Polyurethanprepolymer nach einem der Ansprüche 1 bis 10 und mindestens ein Polyol, vorzugsweise ein Diol, besonders bevorzugt Butandiol, noch bevorzugter 1,4-Butandiol.

**15.** Verwendung von thermoplastischem aliphatischen Polyurethanprepolymer nach einem der Ansprüche 1 bis 10 oder einer Zusammensetzung nach Anspruch 13 oder 14 zur Herstellung von thermoplastischem Polyurethan und / oder einer Polyurethan-Dispersion.

**16.** Polymer erhältlich durch die Umsetzung von mindestens einem thermoplastischen aliphatischen Polyurethanprepolymer nach einem der Ansprüche 1 bis 10 oder einer Zusammensetzung nach Anspruch 13 oder 14 mit mindestens einem Kettenverlängerer, wobei der Kettenverlängerer vorzugsweise ein Polyisocyanat ist.

**17.** Artikel umfassend oder enthaltend ein Polymer nach Anspruch 16, ein thermoplastisches aliphatisches Polyurethanprepolymer nach einem der Ansprüche 1 bis 10 oder eine Zusammensetzung nach Anspruch 13 oder 14.

Fig. 1

E
25
12
D
11
25
9
D
D
1
FIC
3
8
10
14
19
A
22
23
2
21
7
C
D
24
4
6
FIC
20
B
20
5

**Fig. 2**

1
2
3
4
5
6
7 C
8
9
10
11
12
15
16
17
18
19
20
21
22
23
24
25
A
B
D
E
FIC

Fig. 3

1
2
3
4
5
6
7
8
9
10
11
12
13
14
15
16
17
18
19
20
21
22
23
24
25
A
B
C
D
E
FIC

Fig. 4

a)

Wärmekapazität / J/(Kg)
3.3 J/(K*g)
129.9 °C,-96.6 J/g
-20.0 0.0 20.0 40.0 60.0 80.0 100.0 120.0 140.0 160.0 180.0 200.0 220.0
Temperatur / °C

**Fig. 4**

**b)**

Wärmekapazität / J/(Kg)
138.8 °C,-110.7 J/g
3.3 J/(K*g)
-20.0
0.0
20.0
40.0
60.0
80.0
100.0
120.0
140.0
160.0
180.0
200.0
220.0
Temperatur / °C

# EUROPÄISCHER RECHERCHENBERICHT

Nummer der Anmeldung
EP 19 21 6802

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | EP 2 385 075 A1 (PPG IND OHIO INC [US]) 9. November 2011 (2011-11-09) * Formulation 2; Absatz [0261] * ----- | 1-17 | INV. C08G18/10 C08G18/32 C08G18/73 |
| | | | RECHERCHIERTE SACHGEBIETE (IPC) |
| | | | C08G |

Der vorliegende Recherchenbericht wurde für alle Patentansprüche erstellt

| Recherchenort | Abschlußdatum der Recherche | Prüfer |
|---|---|---|
| München | 22. April 2020 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 21 6802

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2020

| Im Recherchenbericht angeführtes Patentdokument | Datum der Veröffentlichung | Mitglied(er) der Patentfamilie | Datum der Veröffentlichung |
|---|---|---|---|
| EP 2385075 A1 | 09-11-2011 | CA 2641773 A1 | 21-06-2007 |
| | | CA 2647094 A1 | 06-12-2007 |
| | | CA 2647153 A1 | 28-06-2007 |
| | | EP 2004717 A2 | 24-12-2008 |
| | | EP 2004719 A1 | 24-12-2008 |
| | | EP 2004720 A2 | 24-12-2008 |
| | | EP 2385075 A1 | 09-11-2011 |
| | | ES 2385359 T3 | 23-07-2012 |
| | | ES 2388618 T3 | 17-10-2012 |
| | | ES 2408598 T3 | 21-06-2013 |
| | | ES 2430245 T3 | 19-11-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1846526 A1
- EP 2004720 A1
- EP 0433823 A1
- DE 102011085944 A1
- WO 0114441 A
- DE 2901774 A


### In der Beschreibung aufgeführte Nicht-Patentliteratur


- Polyurethane. **G. OERTEL.** Kunststoff Handbuch. Hanser Verlag, vol. 7, 99ff
- **KAJIYAMA, T. ; MACKNIGHT, W.J.** *Polymer Journal,* 1970, vol. 1, 548-554
- Makromolekulare Stoffe. HOUBEN-WEYL ''Methoden der organischen Chemie. Georg Thieme Verlag, 1987, vol. E20, 1587-1593
- *Justus Liebigs Annalen der Chemie,* 1949, vol. 562, 75-136
- High Polymers. **J.H. SAUNDERS ; K.C. FRISCH.** Monographie. Verlag Interscience Publishers, 1962, vol. XVI
- **R. GÄCHTER ; U. H. MÜLLER.** Taschenbuch für Kunststoff-Additive. Hanser Verlag, 1990